(19) Europäisches Patentamt
European Patent Office
Office européen des brevets

(11) Publication number: 0 282 218
A2

(12) # EUROPEAN PATENT APPLICATION

(21) Application number: 88301777.4

(22) Date of filing: 01.03.88

(51) Int. Cl.4: C07F 9/38 , C01B 25/34 , C07F 9/00

(30) Priority: 09.03.87 US 23345
29.12.87 US 139240

(43) Date of publication of application:
14.09.88 Bulletin 88/37

(84) Designated Contracting States:
AT BE DE FR GB IT NL SE

(71) Applicant: MOBIL OIL CORPORATION
150 East 42nd Street
New York New York 10017(US)

(72) Inventor: Chang, Clarence Dayton
11 Murray Place
Princeton New Jersey 08540(US)
Inventor: Hellring, Stuart Damon
29 Carlton Avenue
Trenton New Jersey 08618(US)

(74) Representative: Colmer, Stephen Gary
Patent Department c/o Mobil Services
Company Limited Mobil Court 3 Clements
Inn
London WC2A 2EB(GB)

(54) ## Layered divalent metal compositions.

(57) A layered divalent metal compound is described which obeys the general formula:

$$M(HAO_4)_x (R [AO_{4-q}]_n )_y (Z)_z$$

wherein M is a divalent metal, A is a pentavalent element, preferably phosphorus, R is a substituent group, other than H or OH, covalently bonded to A, Z is an intercalated moiety, preferably $H_2O$, x is greater than zero and less than or equal to 1, y is less than 1 such that x+y=1, q is zero or 1, n is 1 or 2, z is 1 or 2 when y is zero, and z is zero to 10 when y is greater than zero.

EP 0 282 218 A2

# LAYERED DIVALENT METAL COMPOSITIONS

This invention relates to layered equivalent metal compositions.

Many layered materials are known which have three-dimensional structures which exhibit their strongest chemical bonding in only two dimensions. In such materials, the stronger chemical bonds are formed in two-dimensional planes and a three-dimensional solid is formed by stacking such planes on top of each other. However, the interactions between the planes are weaker than the chemical bonds holding an individual plane together. The weaker bonds generally arise from interlayer attractions such as Van der Waals forces, electrostatic interactions, and hydrogen bonding. In those situations where the layered structure has electrically neutral sheets interacting with each other solely through Van der Waals forces, a high degree of lubricity is manifested as the planes slide across each other without encountering the energy barriers that arise with strong interlayer bonding. Graphite is an example of such a material. The silicate layers of a number of clay materials are held together by electrostatic attraction produced by ions located between the layers. In addition, hydrogen bonding interactions can occur directly between complementary sites on adjacent layers, or can be mediated by interlamellar bridging molecules, e.g., water.

Among the known layered materials are those containing corner-sharing $PO_2$ and $TO_2$ tetrahedra wherein T is a non-phosphorus trivalent atom. For example $GaPO_4.2H_2O$ (Acta Crysta. 1966, 20, 520) has been reported as having been prepared under hydrothermal conditions. Other trivalent phosphates include $InPO_4.2H_2O$ (Acta Crysta, 1961, 14, 1140) and $AlPO_4.2H_2O$'s, variscite (Acta Crysta., 1977, B33, 263) and metavariscite (Acta Crystal., 1973, B29, 2292). However, such trivalent cationic phosphates are not expected to exhibit any ion exchange capabilities since they possess an electrovalently neutral framework. Layered tetravalent cationic phosphates, viz, crystalline zirconium phosphates

$Zr(HPO_4)_2$ and $Zr(HPO_4)_2.2H_2O$ having a major X-ray reflection peak at 7.56A to 8.0A are disclosed in U.S. Patent No. 3,416,884 along with methods of preparation and ion exchange properties.

The present invention resides in a layered divalent metal compound obeying the general formula:

$$M(HAO_4)_x \quad (R\left[AO_{4-q}\right]_n)_y \; (Z)_z$$

wherein M is a divalent metal, A is a pentavalent element, preferably phosphorus, R is a substituent group, other that H or OH, covalently bonded to A, Z is an intercalated moiety, preferably $H_2O$, x is greater than zero and less than or equal to 1, y is less than 1 such that x+y=1, q is zero or 1, n is 1 or 2, z is 1 or 2 when y is zero, and z is zero to 10 when y is greater than zero.

In its simplest aspect, in which y is zero and A is phosphorus, the compound of the invention can be written as $MHPO_4$ $(Z)_z$ and is believed to contain corner-sharing $PO_2$ and $MO_2$ tetrahedra. Preferably $Z=H_2O$, with the extent of the hydration depending on the synthesis conditions employed. Moreover, the monohydrate from (n=1) can be dehydrated to the anhydrous form (n=0) by careful exposure to dehydrating conditions. When these hydrated materials are exposed to high temperatures, e.g., above 250°C, another 0.5 mole of water is irreversibly desorbed from the framework due to pyrophosphate formation and subsequent collapse to the dense phase is indicated by an X-ray diffraction pattern d-spacing of less than about 6 angstroms.

The compounds $MHPO_4$ $(Z)_z$ are believed to comprise layers having pendent hydrogen groups protecting into interlayer space. However by introducing the substituted species R $[AO_{4-q}]_n$, that is when y is greater than zero in the above general formula, it is found that the compounds have enhanced interlayer distance. This is believed to be due to the presence of the pendent non-hydroxy substituent, R, in the interlayer space.

In the compounds of the invention, the divalent metal M is selected from Groups IIA and IIB of Periodic Table, ie, Be, Mg, Ca, Sr, Ba, Ra, Zn, Cd and Hg, preferably Group IIA metals and most preferably

Mg. Thus, in one specific aspect, the invention resides in the layered compound $MgHPO_4$ $H_2O$, which exhibits a well-defined X-ray diffraction pattern.

The pentavalent element, A, is most preferably phosphorus and for convenience the invention will in general be described with regard to phosphorus and its selection as the pentavalent metal. However, it is to be understood that the other pentavalent metals can be used and the description with regard to phosphorus will generally also apply analogously to the other pentavalent metals, for example, arsenic, antimony, vanadium, niobium and tantalum. It will be appreciated that when A is phosphorus, the substituent $R[AO_{4-q}]_n$ is a phosphonate species when q is 1 and is a phosphate species when q is zero.

When present, the substituent R can be an acyclic group, heteroacyclic group, alicyclic group, aromatic group or heterocyclic group as well as an organometallic group. When the substituent R is present, Y is preferably greater than 0.1 and more preferably greater than 0.25.

The term "acyclic group," as used herein, means a substituted or unsubstituted acyclic group. The term "acyclic" includes saturated and unsaturated aliphatics which can be straight chain or branched chain. The "aliphatics" include alkyl, alkenyl and alkynyl.

The term "heteroacyclic group," as used herein, means an acyclic group containing one or more hetero-atoms in the chain selected from oxygen, nitrogen and sulfur. The heteroatoms can be the same or different in each chain and usually the number of heteroatoms is one, two or three.

The term "alicyclic group, " as used herein, means a substituted or unsubstituted alicyclic group. The term "alicyclic" includes saturated and unsaturated cyclic aliphatics.

The term "aromatic groups" as used herein, means a substitued or unsubstituted aromatic group. The term "aromatic" includes phenyl, naphthyl, biphenyl, anthracyl and phenanthryl. Phenyl is the preferred aromatic group.

The term "heterocyclic group", as used herein, means a substituted or unsubstituted heterocyclic group. The term "heterocyclic" means an alicyclic or aromatic group containing one or more heteroatoms in the ring selected from oxygen, nitrogen and sulfur. The heteroatom can be the same or different in each ring and usually the number of heteroatoms is one, two or three.

The terms "substituted acyclic," "substituted heteroacyclic," "substituted alicyclic," "substituted aromatic" and "substituted heterocyclic," as used herein, mean an acyclic, heteroacyclic, alicyclic, aromatic or heterocyclic group substituted with one or more of the groups selected from alkyl, alkenyl, alkynyl, alkoxy, alkenyloxy, alkynyloxy, alkylthio, alkenythio, alkynylthio, halo, oxo, hydroxy, carbonyl, carboxy, alkylcarbonylloxy, alkylcarbonyl, carboxyalkyl, thio, mercapto, sulfinyl, sulfonyl, imino, amino, cyano, nitro, hydroxyamine, nitroso, cycloalkyl, cycloalkalkyl, aryl, aralkyl, alkaryl, aryloxy, arylalkoxy, alkaryloxy, arylthio, aralkylthio, alkarylthio, arylamino, aralkylamine and alkarylamino.

In addition, R can be an inorganic radical group other than -H or -OH. Examples of such groups include alkoxy, aryloxy, amino, organosilyl and thionyl.

The size of R can affect the interlayer distance of the resulting layered product. For example, as little as 10-25% phenylphosphonic acid incorporated into the hydrothermal preparation, i.e., y = 0.10 to 0.25, results in a 4 to 5 angstrom increase in interstitial distance (as exhibited by X-ray diffraction) over the analogous material which does not have pendent phenyl groups in the interlayer space. In addition, enhanced thermal stability can be observed, even where the pendent groups of the layered material are organic.

Moieties independent of the pendent group, represented by Z, such as $H_2O$ can be intercalated between the layers. Other suitable moieties can include organics such as amines and alcohols. Hydrolyzable compounds such as organometallics can be introduced to

the layered material and reacted with residual or added water to form metal oxide pillars. Moreover, ions may be intercalated within the layered material to form ion intercalated compositions.

Compounds of the formula, $MHPO_4$ z $H_2O$, can be prepared by hydrothermal treatment of anqueous reaction mixture containing a source of at least on divalent metal, M, a source of hydrogen, a source of phosphorus and a source of oxygen. In this mixture, the molar ratio of M:P is maintained at 0.8 to 1.2, preferably about 1. Suitable sources of the metal M include oxides and hydroxides, e.g., MgO and $Mg(OH)_2$. Sources of phosphorus include metaphosphoric acid ($HPO_3$), pyrophosphoric acid ($H_4P_2O_7$), orthophosphoric acid ($H_3PO_4$) and salts thereof. Orthophosphoric acid is particularly preferred. Sources of hydrogen can be obtained from any suitable source, especially from the same phosphoric acids set out above. Sources of oxygen can include water, metal oxides or metal hydroxides, as well as the oxygen-containing phosphorus sources noted above.

Compounds in which y is greater than zero can be prepared by hydrothermal treatment of a reaction mixture, preferably aqueous, containing at least one divalent element M and at least one substituted acid of the formula $((OH)_2OA)_nR$ having a phosphonate-type structure, eg

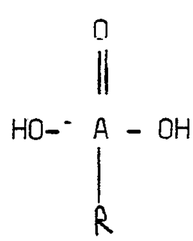

when n=1

or at least one substituted acid of the formula $((OH)_2OAO)_nR$ having a phosphate-type structure, eg

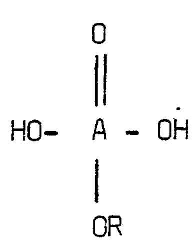

when n=1

wherein A is pentavalent element and R is a ligand other than H or OH. Optionally, the reaction mixture can contain an additional source of hydrogen, an additional source of A and/or an additional soure of oxygen. Ortho-phosphoric and/or phosphorous acid ($P(OH)_3$) and their pentavalent analogues can be present as optional sources of their constitutent elements.

In one preferred embodiment, ortho-phosphoric acid is a component of the reaction mixture. The molar ratio of substituted acid to ortho-phosphoric acid in the reaction mixture can range from at least about 0.1, preferably at least about 0.25. Preferably, the reaction is effected in the presence of an excess of the substituted acid compound and the metal ion is provided as a compound soluble in the liquid media. The normal liquid media is water. However, organic solvents, particularly ethanol, can be employed where water will interfere with the desired reaction.

The molar ratio of divalent metal to pentavalent metal can range from 0.8 to 1.2, preferably from 0.95 to 1.05. Sources of divalent metal include a soluble salt $MX_2$ where X is the anion of the salt. X can be selected from the group of anions including halides, $HSO_4^{-1}$, $SO_4^{-2}$, $O_2C-CH_3^{-1}$, $NO_3^{-1}$, $O^{-2}$, and $OH^{-1}$, with oxides and hydroxides preferred.

The initial pH of the aqueous mixture is preferably 5 to 9, even more preferably 6 to 8. The initial pH of the aqueous mixture can be raised or lowered, if necessary, to place it within the desired range by addition of a pH-altering material to the aqueous mixture. Phosphoric acid is an especially useful additive for lowering the initial pH of the aqueous mixture, while amines or organic ammonium compounds, e.g., dipropylamine, triethylamine and tetraethylammonium hydroxide, can be employed to raise the pH to desired levels. Generally, when phosphoric acid is used as the phosphorus source, the pH of the mixture is highly acidic and requires addition of a pH-raising material in order to achieve the desired initial pH.

The hydrothermal conditions employed in obtaining the layered compositions of the present invention include temperatures of 50 to 500°C, preferably 100 to 250°C, pressures of 345 to 3450 kPa, preferably about 690 to 1725 kPa and contact times of about 5 to 192 hours, preferably 12 to 72 hours, or until such times as crystals of the layered compositions are formed.

The materials of the present invention which are in the hydrated form, i.e., $Z=H_2O$ and n is greater than zero, contain a three-dimensional channel between adjacent layers in which water is present. These materials exhibit lower angle X-ray diffractions than their anhydrous analogues (n=0) and can reversibly desorb some or all of their water. Rehydration of the dehydrated composition causes linear expansion or swelling and alters the interlayer distances as observed by X-ray diffraction. In view of this capability to sorb and desorb water, the compositions of the present invention are suited to use as water sorbents. Materials of the present invention which contain intercalated moieties and/or pendent substituents which are thermally stable may be useful in catalysts or catalyst supports in chemical conversions.

The extent of interlayer separation of the present compositions can be estimated by using standard techniques such as X-ray diffraction using $CuK_{\alpha}$ radiation, to determine the basal spacing, also known as "repeat distance" or "d-spacing." These values indicate the distance between, for example, the uppermost margin of one layer and the uppermost margin of its adjoining layer. If the layer thickness is known, the interlayer spacing can be determined by subtracting the layer thickness from the basal spacing.

The invention will now be more particularly described with reference to the following Examples and the accompaying drawings.

In the Examples, d-spacings are given in Angstrom units and the mole percentages refer to the "in-preparation values" and may only approximate values in the final products.

In the drawings,

Figure 1 depicts the weight loss rate of water over a range of

temperatures for an "as-synthesized" layered magnesium hydrogen phosphate material prepared in accordance with Example 4, and

Figure 2 depicts isothermal water adsorption over a fifty minute period for a calcined layered magnesium hydrogen phosphate prepared in accordance with Example 4.

Example 1

To a solution of ortho-phosphoric acid (85%, 27.6g) in water (55ml) was added magnesium oxide (9.65g). The stirred suspension became very warm and its pH was about 3. After stirring for about 15 min, a solution of tetraethylammonium hydroxide (66.3g) in water (16ml) was added. The resulting suspension (pH about 13) was adjusted to pH=6 by adding additional orthophosphoric acid (8ml). This mixture was transferred to a Teflon lined autoclave, pressurized to 790 kPa (100 psig) with nitrogen, and heated to 135°C for 2 hr, then 182°C (final pressure = 160-170 psig or 1200-1270 kPa) for 3 days wtih stirring. The mixture was cooled, filtered (final pH=6.5), washed with water, and dried at 110°C for 2 hr.

Whereas the magnesium oxide starting material was a dense crystalline phase with the following X-ray powder diffraction pattern:

| PEAK NO. | d-SPACING | 2-THETA | RELATIVE INTENSITY |
|---|---|---|---|
| 1 | 2.43 | 36.91 | 8.5 |
| 2 | 2.11 | 42.89 | 100.0 |

The resulting layered product had the following X-ray diffraction powder pattern:

| PEAK NO. | d-SPACING | 2-THETA | RELATIVE INTENSITY |
|---|---|---|---|
| 1 | 11.00 | 8.02 | 100.0 |
| 2 | 8.74 | 10.11 | 98.7 |
| 3 | 7.23 | 12.23 | 27.5 |
| 4 | 6.54 | 13.52 | 40.7 |
| 5 | 5.33 | 16.61 | 47.7 |
| 6 | 3.83 | 23.18 | 31.7 |
| 7 | 3.54 | 25.13 | 16.0 |
| 8 | 3.24 | 27.51 | 31.6 |
| 9 | 3.06 | 29.11 | 20.8 |
| 10 | 3.03 | 29.50 | 35.1 |
| 11 | 2.93 | 30.49 | 14.6 |
| 12 | 2.90 | 30.83 | 40.2 |
| 13 | 2.87 | 31.11 | 41.0 |
| 14 | 2.83 | 31.54 | 21.7 |
| 15 | 2.70 | 33.11 | 14.4 |
| 16 | 2.66 | 33.65 | 11.1 |
| 17 | 2.58 | 39.83 | 21.5 |
| 18 | 2.26 | 39.83 | 21.5 |
| 19 | 2.21 | 40.85 | 11.9 |
| 20 | 2.10 | 42.99 | 4.3 |

These values, and those obtained below, were determined by standard techniques. The radiation was the K-alpha doublet of copper, and a scintillation counter spectrometer was used. The peak heights, I, and the positions as a function of 2 times theta, where theta is the Bragg angle, were determined. From these, the relative intensities, $I/I_0$ where $I_0$ is the intensity of the strongest line or peak, and d is the interplanar spacing in angstroms (A), corresponding to the recorded lines, were calculated.

Example 2

The procedure described in Example 1 was repeated except triethylamine (18.24g) was substituted for the tetraethylammonium hydroxide and the pH (about 10) was not adjusted with additional

ortho-phosphoric acid. The final autoclave pressure was 230 psig or 1690 kPa (170°C), and the final reaction pH was about 7. The resulting product had the following x-ray diffraction pattern:

| PEAK NO. | d-SPACING | 2-THETA | RELATIVE INTENSITY |
|---|---|---|---|
| 1 | 8.62 | 10.25 | 100.0 |
| 2 | 7.14 | 12.38 | 31.7 |
| 3 | 6.48 | 13.65 | 23.7 |
| 4 | 3.80 | 23.33 | 30.2 |
| 5 | 3.17 | 28.13 | 9.5 |
| 6 | 3.01 | 29.66 | 28.6 |
| 7 | 2.88 | 30.983 | 41.2 |
| 8 | 2.86 | 31.25 | 29.2 |
| 9 | 2.82 | 31.69 | 15.0 |
| 10 | 2.57 | 34.92 | 14.3 |
| 11 | 2.54 | 35.34 | 3.8 |
| 12 | 2.46 | 36.56 | 8.8 |
| 13 | 2.38 | 37.80 | 3.6 |
| 14 | 2.34 | 38.48 | 4.0 |
| 15 | 2.20 | 41.01 | 11.5 |
| 16 | 1.93 | 46.96 | 6.7 |
| 17 | 1.91 | 47.64 | 5.2 |
| 18 | 1.84 | 49.58 | 4.1 |

Example 3

The product of Example 2 was calcined at 1°C/min to 450°C (3 hr) to provide a dense crystalline phase product. This material gave the following X-ray powder diffraction pattern:

| PEAK NO. | d-SPACING | 2-THETA | RELATIVE INTENSITY |
|---|---|---|---|
| 1 | 5.53 | 16.01 | 9.0 |
| 2 | 4.32 | 20.53 | 37.4 |
| 3 | 4.30 | 20.62 | 34.9 |
| 4 | 4.06 | 21.86 | 72.5 |
| 5 | 4.06 | 21.87 | 62.5 |
| 6 | 3.83 | 23.20 | 81.9 |
| 7 | 3.64 | 24.43 | 47.9 |
| 8 | 3.43 | 25.98 | 100.0 |
| 9 | 3.18 | 28.04 | 12.5 |
| 10 | 2.98 | 29.97 | 13.4 |
| 11 | 2.78 | 32.20 | 12.5 |

| | | | |
|---|---|---|---|
| 12 | 2.52 | 35.52 | 35.0 |
| 13 | 2.49 | 35.97 | 14.0 |
| 14 | 2.49 | 36.03 | 16.0 |
| 15 | 2.49 | 36.08 | 15.6 |
| 16 | 2.41 | 37.34 | 21.7 |
| 17 | 2.31 | 38.88 | 5.0 |
| 18 | 2.15 | 42.05 | 1.7 |
| 19 | 2.12 | 42.65 | 32.6 |
| 20 | 2.10 | 43.04 | 9.9 |
| 21 | 2.03 | 44.51 | 20.1 |
| 22 | 1.92 | 47.29 | 2.2 |
| 23 | 1.86 | 49.05 | 4.9 |

Example 4

The procedure described in Example 1 was followed but dipropylamine DPA (8.15g) was substituted for the TEA hydroxide to give an initial pH of about 7. The final reaction pH was also about 7. After work-up, 27.7g of product was recovered.

Elemental analysis for $MgHPO_4.H_2O$:

Calculated (%): Mg, 17.57; H, 2.19; P, 22.40.

Found (%) : Mg, 17.40; H, 2.12; P, 22.07.

The product had the following X-ray diffraction pattern:

| PEAK No. | d-SPACING | 2-THETA | RELATIVE INTENSITY |
|---|---|---|---|
| 1 | 10.96 | 8.06 | 100.0 |
| 2 | 6.51 | 13.60 | 10.7 |
| 3 | 6.09 | 14.54 | 10.40 |
| 4 | 5.32 | 16.65 | 69.5 |
| 5 | 3.78 | 23.55 | 11.5 |
| 6 | 3.54 | 25.17 | 22.30 |
| 7 | 3.32 | 26.84 | 9.6 |
| 8 | 3.23 | 27.56 | 45.70 |
| 9 | 3.06 | 29.17 | 26.9 |
| 10 | 2.93 | 30.52 | 18.9 |
| 11 | 2.87 | 31.16 | 15.8 |
| 12 | 2.87 | 31.18 | 17.6 |
| 13 | 2.69 | 33.17 | 15.3 |
| 14 | 2.66 | 33.71 | 12.2 |
| 15 | 2.51 | 35.77 | 6.3 |
| 16 | 2.33 | 38.66 | 13.5 |
| 17 | 2.26 | 39.90 | 26.5 |
| 18 | 2.03 | 44.53 | 6.0 |
| 19 | 1.98 | 45.85 | 4.7 |

Crystallite size was examined by SEM and found to be 2-10 microns.

A portion of the sample (5g) was calcined 1°C/min to 200°C and held at this temperature for 3 hours. The calcined material was packed into a planchet for X-ray diffraction but underwent linear expansion, overflowing the planchet, upon partial rehydration overnight. The partially hydrated sample gave the following diffraction pattern:

| PEAK NO. | d-SPACING | 2-THETA | RELATIVE INTENSITY |
|---|---|---|---|
| 1 | 10.77 | 8.20 | 72.1 |
| 2 | 8.78 | 10.07 | 100.0 |
| 3 | 7.20 | 12.28 | 15.01 |
| 4 | 5.28 | 16.79 | 17.7 |
| 5 | 5.21 | 17.01 | 13.5 |
| 6 | 4.72 | 18.78 | 14.8 |
| 7 | 4.64 | 19.13 | 20.5 |
| 8 | 3.63 | 24.49 | 13.4 |
| 9 | 3.34 | 26.67 | 8.0 |
| 10 | 3.22 | 27.67 | 14.5 |
| 11 | 3.16 | 28.22 | 2.2 |
| 12 | 2.98 | 29.92 | 13.7 |
| 13 | 2.90 | 30.79 | 17.1 |
| 14 | 2.85 | 31.33 | 32.7 |
| 15 | 2.69 | 33.25 | 7.4 |
| 16 | 2.62 | 34.16 | 0.5 |
| 17 | 2.58 | 34.72 | 1.1 |
| 18 | 2.28 | 39.49 | 6.0 |
| 19 | 2.26 | 39.87 | 4.8 |
| 20 | 2.25 | 40.03 | 7.4 |
| 21 | 2.21 | 40.73 | 2.5 |
| 22 | 2.16 | 41.69 | 3.0 |
| 23 | 1.97 | 46.07 | 3.2 |
| 24 | 1.94 | 46.83 | 0.9 |
| 25 | 1.88 | 48.25 | 1.5 |
| 26 | 1.84 | 49.41 | 2.0 |

This calcined sample was placed in a ceramic boat and rehydrated by equilibration with water vapor in a covered Petri dish overnight. The X-ray diffraction pattern of the rehydrated sample was identical to the "as-synthesized material". This shows the reversible nature of hydration of this material.

Thermogravimetric analysis (TGA) of the "as-synthesized" sample, set out in Figure 1 showed two rapid desorptions of $H_2O$ at $T_{max}$=160°C and $T_{max}$=460°C. These desorptions were in an approximate ratio of 2:1 and were equivalent to loss of <u>one</u> and one-half mol $H_2O$/mol $MgHPO_4$, respectively.

In a separate experiment, the "as-synthesized" sample was calcined in a TGA at 120°C to nearly constant weight. The sample had lost about 6.2mg $H_2O$. The sample was cooled to 30°C, then exposed to $H_2O$ vapor (about 25 torr) in a sweep of helium (107ml/min). The sample showed nearly complete rehydration over a 50 minute period (Figure 2).

No templated amine appeared to be incorporated into the layered materials based on TGA data.

These data show that the prepared material had the structure $MgHPO_4.H_2O$ and can be reversibly dehydrated by up to one mole of water. A further 0.5 mole of water is removed irreversibly with the formation of magnesium pyrophosphate as a dense crystalline phase.

## Example 5

The procedure described in Example 4 was repeated with the exception that hydrothermal treatment was continued for 8 days at 180°C (175-180 psig). The resulting product (25.9g) had an identical X-ray diffraction pattern to the first given in Example 4.

## Example 6

The procedure described in Example 1 was repeated except that no tetraethylammonium hydroxide was added. The initial pH was about 3 and the final pH was about 4.

The resulting product (29.3g) had an X-ray diffraction pattern similar to that of Example 4, but the peaks were generally less intense indicating lower crystallinity.

## Example 7

The procedure described in Example 2 was repeated but without

hydrothermal treatment. Instead the mixture (pH about 11) was stirred at room temperature. This resulted in a dense phase product (33.6g) with the following X-ray powder diffraction pattern:

| PEAK NO. | d-SPACING | 2-THETA | RELATIVE INTENSITY |
|---|---|---|---|
| 1 | 5.94 | 14.91 | 90.4 |
| 2 | 5.85 | 15.13 | 2.1 |
| 3 | 5.34 | 16.59 | 52.1 |
| 4 | 5.10 | 17.37 | 6.4 |
| 5 | 4.71 | 18.83 | 84.5 |
| 6 | 4.60 | 19.27 | 26.0 |
| 7 | 4.49 | 19.76 | 30.4 |
| 8 | 4.14 | 21.45 | 37.0 |
| 9 | 3.69 | 24.12 | 11.7 |
| 10 | 3.65 | 24.37 | 16.3 |
| 11 | 3.57 | 24.91 | 11.6 |
| 12 | 3.46 | 25.74 | 100.0 |
| 13 | 3.44 | 25.86 | 19.7 |
| 14 | 3.18 | 28.00 | 16.3 |
| 15 | 3.08 | 28.95 | 73.4 |
| 16 | 3.04 | 29.37 | 83.9 |
| 17 | 2.97 | 30.09 | 3.4 |
| 18 | 2.81 | 31.81 | 25.2 |
| 19 | 2.79 | 32.07 | 29.5 |
| 20 | 2.72 | 32.91 | 38.3 |
| 21 | 2.70 | 33.16 | 10.1 |
| 22 | 2.58 | 34.77 | 48.7 |
| 23 | 2.55 | 35.17 | 3.5 |
| 24 | 2.50 | 35.89 | 6.9 |
| 25 | 2.48 | 36.17 | 4.1 |
| 26 | 2.42 | 36.98 | 12.6 |
| 27 | 2.41 | 37.31 | 14.5 |
| 28 | 2.39 | 37.65 | 15.4 |
| 29 | 2.37 | 37.98 | 19.2 |
| 30 | 2.32 | 38.73 | 0.6 |
| 31 | 2.22 | 40.53 | 1.9 |
| 32 | 2.21 | 40.87 | 7.3 |
| 33 | 2.20 | 41.04 | 15.6 |
| 34 | 2.17 | 41.50 | 8.1 |
| 35 | 2.14 | 42.24 | 5.8 |
| 36 | 2.10 | 42.94 | 6.3 |
| 37 | 2.09 | 43.23 | 10.8 |
| 38 | 2.07 | 43.69 | 8.8 |
| 39 | 2.05 | 44.04 | 3.1 |
| 40 | 2.04 | 44.34 | 12.8 |
| 41 | 1.98 | 45.79 | 6.9 |

| | | | |
|---|---|---|---|
| 42 | 1.93 | 47.07 | 20.8 |
| 43 | 1.91 | 47.58 | 0.5 |
| 44 | 1.89 | 47.99 | 3.9 |
| 45 | 1.89 | 48.22 | 9.6 |
| 46 | 1.87 | 48.58 | 11.9 |

These data demonstrate the need for hydrothermal treatment in the amine neutralized system to obtain the layered crystalline structures.

Example 9

A mixture of ortho-phosphoric acid (85%, 27.6g), water (55g), and MgO (9.65g) was stirred at room temperature (pH=3) for 45 min., then filtered and washed with water. After drying at 110°C, the resulting product gave the following X-ray powder diffraction pattern:

| PEAK NO. | d-SPACING | 2-THETA | RELATIVE INTENSITY |
|---|---|---|---|
| 1 | 5.92 | 14.95 | 78.3 |
| 2 | 5.33 | 16.63 | 48.1 |
| 3 | 5.09 | 17.40 | 5.5 |
| 4 | 4.70 | 18.87 | 81.9 |
| 5 | 4.59 | 19.31 | 22.8 |
| 6 | 4.48 | 19.81 | 33.8 |
| 7 | 4.13 | 21.50 | 31.0 |
| 8 | 3.68 | 24.18 | 11.6 |
| 9 | 3.64 | 24.42 | 15.2 |
| 10 | 3.57 | 24.98 | 12.5 |
| 11 | 3.45 | 25.79 | 100.0 |
| 12 | 3.44 | 25.89 | 21.0 |
| 13 | 3.18 | 28.04 | 14.7 |
| 14 | 3.08 | 29.00 | 70.6 |
| 15 | 3.03 | 29.429 | 78.7 |
| 16 | 2.81 | 31.86 | 24.3 |
| 17 | 2.78 | 32.12 | 27.8 |
| 18 | 2.71 | 32.97 | 38.0 |
| 19 | 2.70 | 33.21 | 7.5 |
| 20 | 2.57 | 34.82 | 47.6 |
| 21 | 2.51 | 35.65 | 12.2 |
| 22 | 2.43 | 37.00 | 8.6 |
| 23 | 2.42 | 37.05 | 9.2 |
| 24 | 2.40 | 37.37 | 14.7 |
| 25 | 2.38 | 37.70 | 13.9 |
| 26 | 2.36 | 38.03 | 18.6 |

| | | | |
|---|---|---|---|
| 27 | 2.20 | 40.92 | 7.9 |
| 28 | 2.19 | 41.09 | 11.9 |
| 29 | 2.17 | 41.54 | 8.9 |
| 30 | 2.14 | 42.28 | 6.4 |
| 31 | 2.10 | 43.00 | 6.9 |
| 32 | 2.09 | 43.26 | 8.2 |
| 33 | 2.09 | 43.32 | 7.5 |
| 34 | 2.07 | 43.76 | 4.8 |
| 35 | 2.04 | 44.38 | 7.4 |
| 36 | 1.98 | 45.84 | 6.7 |
| 37 | 1.93 | 47.12 | 19.1 |
| 38 | 1.93 | 47.16 | 14.8 |
| 39 | 1.89 | 48.03 | 6.7 |
| 40 | 1.88 | 48.30 | 10.0 |
| 41 | 1.87 | 48.62 | 9.6 |

These data show that hydrothermal treatment is necessary to obtain layered crystalline structures in a low pH medium.

Example 10

To a solution of ortho-phosphoric acid (85%, 27.6g) in water (55g) was slowly added magnesium hydroxide, $Mg(OH)_2$, (13.96g). The stirred suspension (pH=3) was neutralized with dipropylamine (5.4g) to pH=5. This mixture was heated in a sealed autoclave (100 psig or 790 kPa nitrogen) to 135°C for 2 hr, then 180°C for 2 days (final pressure 1340 kpa or 180 psig). The product was cooled (final pH=6.5), filtered and washed with water. After drying at 110°C (2 hr), the resulting product (26.6g) gave the following X-ray powder diffraction pattern:

| PEAK NO. | d-SPACING | 2-THETA | RELATIVE INTENSITY |
|---|---|---|---|
| 1 | 10.82 | 8.17 | 100.0 |
| 2 | 6.05 | 14.64 | 11.4 |
| 3 | 5.29 | 16.75 | 84.4 |
| 4 | 4.19 | 21.7 | 18.6 |
| 5 | 3.89 | 22.86 | 5.6 |
| 6 | 3.76 | 23.65 | 13.7 |
| 7 | 3.52 | 25.29 | 24.2 |
| 8 | 3.31 | 26.95 | 12.9 |
| 9 | 3.22 | 27.67 | 57.8 |
| 10 | 3.14 | 28.41 | 28.8 |

| | | | |
|---|---|---|---|
| 11 | 3.05 | 29.27 | 34.0 |
| 12 | 3.01 | 29.61 | 28.4 |
| 13 | 2.97 | 29.99 | 74.3 |
| 14 | 2.91 | 30.63 | 30.9 |
| 15 | 2.86 | 31.26 | 34.60 |
| 16 | 2.82 | 31.65 | 12.4 |
| 17 | 2.69 | 33.28 | 24.0 |
| 18 | 2.65 | 33.81 | 14.5 |
| 19 | 2.60 | 34.48 | 13.0 |
| 20 | 2.50 | 35.88 | 7.3 |
| 21 | 2.25 | 40.00 | 29.5 |
| 22 | 2.14 | 42.23 | 9.4 |
| 23 | 1.96 | 46.40 | 1.5 |
| 24 | 1.90 | 47.93 | 2.8 |
| 25 | 1.86 | 48.91 | 5.0 |

These data demonstrate that magnesium hydroxide may be substituted for magnesium oxide in the preparation. However, overall intensity of the diffraction pattern was much lower for this preparation which indicates lower crystallinity.

Example 11

The procedure described in Example 10 was followed but no dipropylamine was added. The final pH was 5. The resulting product (27.2g) was poorly crystalline but gave the following X-ray powder diffraction pattern:

| PEAK NO. | d-SPACING | 2-THETA | RELATIVE INTENSITY |
|---|---|---|---|
| 1 | 10.92 | 8.09 | 36.9 |
| 2 | 8.33 | 10.62 | 22.1 |
| 3 | 7.25 | 12.19 | 11.5 |
| 4 | 5.32 | 16.66 | 17.8 |
| 5 | 4.32 | 20.55 | 16.4 |
| 6 | 4.21 | 21.10 | 26.5 |
| 7 | 4.10 | 21.67 | 6.3 |
| 8 | 3.90 | 22.79 | 8.6 |
| 9 | 3.62 | 24.55 | 21.7 |
| 10 | 3.59 | 24.76 | 20.6 |
| 11 | 3.36 | 26.50 | 10.6 |
| 12 | 3.15 | 28.35 | 39.2 |
| 13 | 3.06 | 29.18 | 13.0 |
| 14 | 3.02 | 29.55 | 38.7 |
| 15 | 2.99 | 20.90 | 100.0 |

| | | | |
|---|---|---|---|
| 16 | 2.98 | 29.91 | 85.4 |
| 17 | 2.91 | 30.67 | 13.7 |
| 18 | 2.87 | 31.18 | 30.6 |
| 19 | 2.83 | 31.57 | 9.5 |
| 20 | 2.70 | 33.21 | 15.0 |
| 21 | 2.61 | 34.36 | 8.6 |
| 22 | 2.49 | 36.10 | 5.9 |
| 23 | 2.42 | 37.15 | 8.1 |
| 24 | 2.14 | 42.13 | 19.9 |
| 25 | 2.01 | 45.17 | 5.1 |
| 26 | 1.94 | 46.74 | 4.6 |
| 27 | 1.86 | 48.85 | 7.7 |

EXAMPLE 12

Magnesium oxide powder (9.65 g) was added to a solution of ortho-phosphoric acid (27.6 g) in water (55 g) while the exothermic mixture was hand stirred. The acidic mixture was adjusted from a pH of 3 to a pH of 7.2 with dipropylamine (7.55 g) and heated to 180°C in a teflon-lined autoclave under nitrogen pressure (230 psig or 1690 kpa) with stirring. After 4 days, the mixture (pH = 6.2) was cooled, centrifuged, filtered, and washed with water. After drying (110°C for 2 hr), the product was recovered as a white powder (30.3 g) which showed the following X-ray diffraction pattern:

| PEAK | D-SPACE | RELATIVE INTENSITY |
|---|---|---|
| 1 | 10.98 | 100.0 |
| 2 | 8.73 | 30.4 |
| 3 | 7.22 | 12.9 |
| 4 | 6.54 | 32.3 |
| 5 | 6.10 | 9.6 |
| 6 | 5.33 | 66.4 |
| 7 | 4.90 | 4.0 |
| 8 | 4.53 | 3.3 |
| 9 | 4.28 | 5.7 |
| 10 | 4.22 | 5.4 |
| 11 | 4.07 | 7.5 |
| 12 | 4.03 | 4.7 |
| 13 | 3.84 | 21.7 |
| 14 | 3.79 | 12.4 |
| 15 | 3.54 | 20.0 |
| 16 | 3.33 | 9.6 |
| 17 | 3.24 | 42.0 |
| 18 | 3.19 | 7.6 |
| 19 | 3.13 | 4.5 |
| 20 | 3.07 | 23.6 |

| | | |
|---|---|---|
| 21 | 3.03 | 22.4 |
| 22 | 2.93 | 18.4 |
| 23 | 2.90 | 13.2 |
| 24 | 2.87 | 25.0 |
| 25 | 2.84 | 17.5 |
| 26 | 2.71 | 15.3 |
| 27 | 2.66 | 12.8 |
| 28 | 2.61 | 5.5 |
| 29 | 2.58 | 9.3 |

EXAMPLE 13

Magnesium oxide powder (9.65 g) was added to a solution of ortho-phosphoric acid (OPA) (20.9 g) and phenylphosphonic acid (PPA) (9.48 g) in water (55 g) while the mixture was hand stirred (exothermic). The ratio of PPA to OPA was about 1 to 3. The acidic, sudsy mixture was adjusted from pH = 3 to pH = 7.2 with dipropylamine (10.9 g) and heated to 180°C in a teflon-lined autoclave under nitrogen pressure (230 psig or 1690 kPa) while stirring. After 4 days, the mixture (pH = 6.2) was cooled, centrifuged, filtered, and washed with water. After drying (110°C for 2 hr), the product was recovered as a white powder (29.2 g) which showed the following X-ray diffraction pattern:

| PEAK | D-SPACE | RELATIVE INTENSITY |
|---|---|---|
| 1 | 14.45 | 100.00 |
| 2 | 8.72 | 64.90 |
| 3 | 7.22 | 23.50 |
| 4 | 6.54 | 20.00 |
| 5 | 5.25 | 16.88 |
| 6 | 4.90 | 18.09 |
| 7 | 4.60 | 19.29 |
| 8 | 4.22 | 21.07 |
| 9 | 3.84 | 23.18 |
| 10 | 3.80 | 23.44 |
| 11 | 3.68 | 24.21 |
| 12 | 3.60 | 24.72 |
| 13 | 3.19 | 27.98 |
| 14 | 3.12 | 28.60 |
| 15 | 3.03 | 29.50 |
| 16 | 2.90 | 30.82 |
| 17 | 2.88 | 31.09 |
| 18 | 2.84 | 31.53 |
| 19 | 2.71 | 33.04 |
| 20 | 2.66 | 33.64 |
| 21 | 2.58 | 34.75 |

This shows that incorporating 25 mol.% phenylphosphonic acid into the preparation increases the interstitial spacing by over 3A. The product in Example 13 is further distinguished from that in Example 12 by a rapid weight loss in thermogravimetric analysis (TGA) conducted at 20°C/minute, 200 ml He/minute with a maximum rate near 650°C, which is not present with the product of Example 12. This weight loss is probably due to decomposition of the phenylphosphonate linkage.

The thermal stability of the product from Example 13 was demonstrated by heating separate gram samples to 100, 200, 300, 400, and 500°C, each at a rate adjusted to reach final temperature in 45 min., then held 5 min. at this temperature. Collapse of the low angle peak (d = 14.39) was significant in the sample heated to 400°C, and complete at 500°C. The sample was stable at 300°C which shows that the substitution of R for pendent OH stabilizes the interstitial distances by at least 100°C over the product of Example 12 which began to collapse above 200°C.

EXAMPLE 14

Magnesium oxide powder (4.82 g) was added to a solution of phenylphosphonic acid (19.0 g) in water (40.5 g) while the mixture was hand stirred (exothermic). The acidic mixture was adjusted from pH = 2 to pH = 7.2 with dipropylamine (4.88 g) and heated to 180°C in a teflon-lined 300 ml autoclave under nitrogen pressure (200 psig or 1480 kPa) while stirring. Due to excess volume, 23.8 g of this mixture was not added to the autoclave. After 4 days, the mixture was cooled, centrifuged, filtered, and washed with water. After drying (110°C for 2 hr), the product was recovered as a white powder (17.4 g) which showed the following X-ray diffraction pattern:

| PEAK | D-SPACE | I/IMAX |
|---|---|---|
| 1 | 16.278 | 2.6 |
| 2 | 15.909 | 3.9 |
| 3 | 14.900 | 16.3 |
| 4 | 14.427 | 100.0 |

| | | |
|---|---|---|
| 5 | 7.319 | 1.7 |
| 6 | 7.193 | 11.7 |
| 7 | 5.375 | 0.4 |
| 8 | 5.252 | 14.8 |
| 9 | 4.824 | 0.6 |
| 10 | 4.783 | 1.6 |
| 11 | 4.789 | 1.7 |
| 12 | 4.602 | 9.1 |
| 13 | 4.189 | 0.1 |
| 14 | 4.097 | 0.1 |
| 15 | 4.047 | 0.7 |
| 16 | 4.033 | 1.4 |
| 17 | 4.023 | 1.8 |
| 18 | 3.676 | 4.1 |
| 19 | 3.650 | 2.4 |
| 20 | 3.592 | 4.0 |
| 21 | 3.467 | 0.2 |
| 22 | 3.409 | 2.2 |
| 23 | 3.356 | 0.1 |
| 24 | 3.284 | 0.7 |
| 25 | 3.276 | 1.1 |
| 26 | 3.111 | 0.4 |
| 27 | 3.106 | 0.5 |
| 28 | 3.098 | 0.5 |
| 29 | 3.066 | 0.2 |
| 30 | 3.040 | 0.2 |
| 31 | 3.024 | 0.3 |
| 32 | 2.965 | 0.1 |
| 33 | 2.956 | 0.1 |
| 34 | 2.916 | 3.9 |
| 35 | 2.882 | 2.0 |
| 36 | 2.874 | 2.3 |
| 37 | 2.872 | 2.5 |
| 38 | 2.872 | 1.5 |
| 39 | 2.843 | 0.1 |
| 40 | 2.821 | 1.1 |
| 41 | 2.817 | 2.0 |
| 42 | 2.816 | 1.4 |
| 43 | 2.765 | 0.8 |
| 44 | 2.764 | 0.8 |
| 45 | 2.637 | 0.1 |
| 46 | 2.621 | 0.1 |
| 47 | 2.571 | 2.5 |

These data show that no increase in interstitial spacing was obtained between 25 mol.% and 100 mol.% PPA in the magnesium preparation.

EXAMPLE 15

Magnesium oxide powder (9.65 g) was added to a solution of ortho-phosphoric acid (24.9 g) and phenylphosphonic acid (3.79 g) in water (55 g) while the mixture was hand stirred (exothermic). The acidic mixture was adjusted from pH = 3 to pH = 7.2 with dipropylamine (11.67 g) and heated to 180°C in a teflon-lined autoclave under nitrogen pressure (210 psig or 1550 kPa) while stirring. After 4 days, the mixture was cooled, centrifuged, filtered, and washed with water. After drying (110°C for 2 hr), the product was recovered as a white powder (28.5 g) which showed the following X-ray diffraction pattern:

| PEAK | D-SPACE | RELATIVE INTENSITY |
|---|---|---|
| 1 | 8.740 | 100.0 |
| 2 | 7.228 | 25.2 |
| 3 | 6.548 | 42.3 |
| 4 | 5.960 | 25.6 |
| 5 | 5.354 | 28.9 |
| 6 | 4.906 | 5.8 |
| 7 | 4.723 | 38.6 |
| 8 | 4.620 | 4.6 |
| 9 | 4.504 | 10.7 |
| 10 | 4.219 | 8.2 |
| 11 | 4.153 | 11.9 |
| 12 | 3.840 | 33.7 |
| 13 | 3.798 | 5.4 |
| 14 | 3.657 | 8.4 |
| 15 | 3.469 | 26.2 |
| 16 | 3.191 | 17.0 |
| 17 | 3.091 | 15.0 |
| 18 | 3.042 | 42.7 |
| 19 | 3.031 | 44.5 |
| 20 | 2.903 | 32.7 |
| 21 | 2.878 | 24.9 |
| 22 | 2.839 | 26.7 |
| 23 | 2.795 | 11.1 |
| 24 | 2.726 | 10.3 |
| 25 | 2.711 | 8.4 |
| 26 | 2.584 | 34.2 |

These data show that 10 mol.% PPA was insufficient to effect pillaring in the final product.

EXAMPLE 16

Calcium oxide powder (13.46 g) was added to a solution of ortho-phosphoric acid (27.6 g) in water (55 g) while the mixture was hand stirred (exothermic). The acidic mixture was adjusted from pH = 2 to pH = 7.2 with dipropylamine (5.92 g) and heated to 180°C in a teflon-lined autoclave under nitrogen pressure (260 psig or 1890 kPa) while stirring. After 4 days, the mixture was cooled, centrifuged, filtered, and washed with water. After drying (110°C for 2 hr), the product was recovered as a white powder (24.3 g) which showed the following X-ray diffraction pattern:

| PEAK | D-SPACE | RELATIVE INTENSITY |
|---|---|---|
| 1 | 3.443 | 17.6 |
| 2 | 3.376 | 100.0 |
| 3 | 3.358 | 81.9 |
| 4 | 3.128 | 17.5 |
| 5 | 3.090 | 9.2 |
| 6 | 2.960 | 87.4 |
| 7 | 2.937 | 31.1 |
| 8 | 2.818 | 39.3 |
| 9 | 2.781 | 18.6 |
| 10 | 2.757 | 36.0 |
| 11 | 2.727 | 62.0 |

These data show that a rather dense crystalline phase is obtained without PPA present in the calcium preparation.

Example 17

Calcium oxide powder (9.65 g) was added to a solution of ortho-phosphoric acid (20.9g) and phenylphosphonic acid (9.48 g) in water (55 g) while the mixture was hand stirred (exothermic). The sudsy, acidic mixture was adjusted from pH = 2 to pH = 7.2 with dipropylamine (6.18 g) and heated to 166°c in a teflon-lined autoclave under nitrogen pressure (205 psig or 1514 kPa while stirring. After 4 days, the mixture (pH = 6.2) was cooled, centrifuged, filtered, and washed with water. After drying (110°C for 2 hr), the product was recovered as a white powder (22.6g) which showed the following X-ray diffraction pattern:

| PEAK | D-SPACE | RELATIVE INTENSITY |
|---|---|---|
| 1 | 35.396 | 0.1 |
| 2 | 30.983 | 0.1 |
| 3 | 28.224 | 0.0 |
| 4 | 25.952 | 0.1 |
| 5 | 15.699 | 11.0 |
| 6 | 15.407 | 100.0 |
| 7 | 11.330 | 0.1 |
| 8 | 7.703 | 4.3 |
| 9 | 6.749 | 0.6 |
| 10 | 5.278 | 0.4 |
| 11 | 5.247 | 0.7 |
| 12 | 5.133 | 4.7 |
| 13 | 4.404 | 0.2 |
| 14 | 3.929 | 0.8 |
| 15 | 3.892 | 1.0 |
| 16 | 3.850 | 17.9 |
| 17 | 3.846 | 12.6 |
| 18 | 3.444 | 2.7 |
| 19 | 3.376 | 4.6 |
| 20 | 3.359 | 3.9 |
| 21 | 3.351 | 2.5 |
| 22 | 3.300 | 0.3 |
| 23 | 3.176 | 0.7 |
| 24 | 3.145 | 0.4 |
| 25 | 3.129 | 0.9 |
| 26 | 3.091 | 1.2 |
| 27 | 3.079 | 1.7 |
| 28 | 2.962 | 3.7 |
| 29 | 2.939 | 1.4 |
| 30 | 2.818 | 6.3 |
| 31 | 2.816 | 5.0 |
| 32 | 2.783 | 3.5 |
| 33 | 2.777 | 2.6 |
| 34 | 2.762 | 1.5 |
| 35 | 2.756 | 1.7 |
| 36 | 2.724 | 5.4 |
| 37 | 2.634 | 1.4 |
| 38 | 2.620 | 0.6 |
| 39 | 2.590 | 0.4 |

The thermal stability of this product was demonstrated by heating separate gram samples to 100, 200, 300, 400, and 500°C, each at a rate adjusted to reach final temperature in 45 min., then held 5 min. at this temperature. Collapse of the low angle peak (d = 15.41)

was complete in the sample heated to 400°C, although the sample was stable at 300°C.

Decomposition of this product by TGA showed weight losses very similar to that of Example 16 despite their very different X-ray powder patterns. Phosphorous-31 magic-angle-spinning (mas) nmr indicated this product contained little or no organically-substituted phosphorus. However, repeating this preparation using 50 and 75 mol.% PPA gave products showing both low-temperature dehydration and high-temperature organic decomposition by TGA similar to the magnesium examples described above. These higher PPA preparations also gave X-ray diffraction patterns similar to Example 18 (100 mol.% PPA), which showed only organically-substituted phosphorous by mas nmr.

EXAMPLE 18

Calcium oxide powder (13.46 g) was added to a solution of phenylphosphonic acid (37.9 g) in water (130 g) while the mixture was hand stirred (exothermic). The acidic mixture was adjusted from pH = 5.2 to pH = 7.2 with dipropylamine (20.38 g) and heated to 180°C in a teflon-lined autoclave (300 ml) under nitrogen pressure (240 psig or 1760 kPa) while stirring. Due to excess volume, 65.8 g of this mixture could not be added to the reactor. After 4 days, the mixture was cooled, centrifuged, filtered, and washed with water. After drying (110°C for 2 hr), the product was recovered as a white powder (26.2 g) which showed the following X-ray diffraction pattern:

| PEAK | D-SPACE | RELATIVE INTENSITY |
|---|---|---|
| 1 | 19.663 | 0.2 |
| 2 | 17.808 | 1.1 |
| 3 | 16.135 | 7.0 |
| 4 | 15.948 | 10.4 |
| 5 | 14.964 | 100.0 |
| 6 | 7.586 | 2.5 |
| 7 | 7.439 | 7.8 |
| 8 | 7.460 | 8.1 |
| 9 | 7.275 | 0.5 |
| 10 | 7.211 | 0.3 |
| 11 | 4.989 | 3.7 |

| | | |
|---|---|---|
| 12 | 4.971 | 4.5 |
| 13 | 4.964 | 4.8 |
| 14 | 4.830 | 0.5 |
| 15 | 4.778 | 0.8 |
| 16 | 4.719 | 1.0 |
| 17 | 4.674 | 1.0 |
| 18 | 4.618 | 0.5 |
| 19 | 4.547 | 0.2 |
| 20 | 4.120 | 0.4 |
| 21 | 3.755 | 0.2 |
| 22 | 3.727 | 0.5 |
| 23 | 3.722 | 0.5 |
| 24 | 3.709 | 0.4 |
| 25 | 3.644 | 0.2 |
| 26 | 3.585 | 0.3 |
| 27 | 3.575 | 0.4 |
| 28 | 3.566 | 0.4 |
| 29 | 3.540 | 0.3 |
| 30 | 3.442 | 0.2 |
| 31 | 3.432 | 0.3 |
| 32 | 3.098 | 0.2 |
| 33 | 3.066 | 0.2 |
| 34 | 3.056 | 0.2 |
| 35 | 3.044 | 0.4 |
| 36 | 3.037 | 0.4 |
| 37 | 2.992 | 0.3 |
| 38 | 2.982 | 0.3 |
| 39 | 2.979 | 0.3 |
| 40 | 2.972 | 0.3 |
| 41 | 2.964 | 0.2 |
| 42 | 2.956 | 0.2 |
| 43 | 2.926 | 0.2 |
| 44 | 2.918 | 0.2 |

These data show that the organically-pillared calcium phosphates are crystallographically distinct from the 25 mol.% PPA preparation described in Example 17, even though their interlaminar spacings may be similar. Data in Examples 17 and 18 also indicate that somewhat greater than 25 mol.% PPA is required to effect organic-pillaring in calcium phosphates.

EXAMPLE 19

Calcium oxide powder (13.46 g) was added to a solution of ortho-phosphoric acid (24.9 g) and phenylphosphonic acid (3.79 g) in water (55 g) while the mixture was hand stirred (exothermic). The

acidic mixture was adjusted from pH = 3 to pH = 7.2 with dipropylamine (6.52 g) and heated to 180°C in a teflon-lined autoclave under nitrogen pressure (220 psig or 1620 kPa) while stirring. After 4 days, the mixture (pH = 6.2) was cooled, centrifuged, filtered, and washed with water. After drying (110°C for 2 hr), the product was recovered as a white powder (25.1 g) which showed the following X-ray diffraction pattern:

| PEAK | D-SPACE | RELATIVE INTENSITY |
|---|---|---|
| 1 | 32.386 | 2.4 |
| 2 | 26.788 | 0.5 |
| 3 | 20.512 | 2.9 |
| 4 | 19.303 | 1.2 |
| 5 | 8.195 | 8.2 |
| 6 | 6.757 | 24.6 |
| 7 | 3.488 | 45.0 |
| 8 | 3.375 | 88.4 |
| 9 | 3.356 | 48.2 |
| 10 | 3.301 | 8.9 |
| 11 | 3.234 | 1.6 |
| 12 | 3.190 | 10.9 |
| 13 | 3.172 | 11.8 |
| 14 | 3.128 | 20.7 |
| 15 | 2.961 | 100.0 |
| 16 | 2.939 | 35.2 |
| 17 | 2.887 | 9.1 |
| 18 | 2.868 | 16.3 |
| 19 | 2.818 | 89.0 |
| 20 | 2.818 | 76.3 |
| 21 | 2.780 | 52.3 |
| 22 | 2.764 | 31.6 |
| 23 | 2.758 | 37.5 |
| 24 | 2.729 | 76.4 |
| 25 | 2.634 | 16.1 |
| 26 | 2.632 | 18.1 |
| 27 | 2.625 | 9.6 |
| 28 | 2.595 | 5.4 |
| 29 | 2.580 | 1.3 |

These data show that 10 mol.% PPA was insufficient to effect pillaring in the calcium preparation.

EXAMPLE 20

Barium oxide powder (36.8 g) was added to a solution of

ortho-phosphoric acid (27.6 g) in water (55 g) while the mixture was hand stirred (exothermic). The acidic mixture was adjusted from pH = 1 to pH = 7.1 with dipropylamine (12.1 g) and heated to 175°C in a teflon-lined autoclave under nitrogen pressure (200 psig or 1480 kPa) while stirring. After 3 days, the mixture (pH = 10) was cooled, centrifuged, filtered, and washed with water. After drying (110°C for 2 hr), the product was recovered as a white powder (53.3 g) which showed the following X-ray diffraction pattern:

| PEAK | D-SPACE | RELATIVE INTENSITY |
|---|---|---|
| 1 | 4.441 | 31.4 |
| 2 | 3.861 | 14.3 |
| 3 | 3.588 | 100.0 |
| 4 | 3.528 | 41.5 |
| 5 | 3.196 | 10.2 |
| 6 | 3.001 | 25.1 |
| 7 | 2.855 | 30.7 |
| 8 | 2.804 | 11.1 |

These data show that a relatively dense phase is obtained without PPA pillaring in the barium preparation.

EXAMPLE 21:

Barium oxide powder (36.8 g) was added to a solution of ortho-phosphoric acid (20.9 g) and phenylphosphonic acid (9.48 g) in water (55 g) while the mixture was hand stirred (exothermic). The acidic mixture was adjusted from pH = 3 to pH = 7.3 with dipropylamine (0.55 g) and heated to 180°C in a teflon-lined autoclave under nitrogen pressure (210 psig or 1540 kPa) while stirring. After 4 days, the mixture (pH = 7.0) was cooled, centrifuged, filtered, and washed with water. After drying (110°C for 2 hr), the product was recovered as a white powder (48.4 g) which showed the following X-ray diffraction pattern:

| PEAK | D-SPACE | RELATIVE INTENSITY |
|---|---|---|
| 1 | 15.892 | 17.0 |
| 2 | 4.734 | 9.9 |
| 3 | 4.440 | 29.4 |

| | | |
|---|---|---|
| 4 | 3.862 | 15.7 |
| 5 | 3.589 | 100.0 |
| 6 | 3.528 | 45.7 |
| 7 | 3.181 | 61.5 |
| 8 | 3.001 | 25.9 |
| 9 | 2.855 | 26.8 |
| 10 | 2.802 | 58.4 |

EXAMPLE 22

Barium oxide powder (36.8 g) was added to a solution of phenylphosphonic acid (37.8 g) in water (105 g) while the mixture was hand stirred (exothermic). The basic, gritty mixture (pH = 11-12) was heated to 185°C in a teflon-lined autoclave under nitrogen pressure (300 psig or 2170 kPa) while stirring. After 4 days, the mixture (pH = 8.0) was cooled, centrifuged, filtered, and washed with water. After drying (110°C for 2 hr), the product was recovered as a white powder (15.5 g) which showed the following X-ray diffraction pattern:

| PEAK | D-SPACE | RELATIVE INTENSITY |
|---|---|---|
| 1 | 20.575 | 0.1 |
| 2 | 15.445 | 1.4 |
| 3 | 14.918 | 3.4 |
| 4 | 13.755 | 100.0 |
| 5 | 7.155 | 0.4 |
| 6 | 6.889 | 32.6 |
| 7 | 5.345 | 0.8 |
| 8 | 5.085 | 0.1 |
| 9 | 4.593 | 16.9 |
| 10 | 4.216 | 1.0 |
| 11 | 4.138 | 2.1 |
| 12 | 4.130 | 2.1 |
| 13 | 4.034 | 2.0 |
| 14 | 4.023 | 1.7 |
| 15 | 3.833 | 0.8 |
| 16 | 3.721 | 1.8 |
| 17 | 3.711 | 1.3 |
| 18 | 3.660 | 1.4 |
| 19 | 3.552 | 1.0 |
| 20 | 3.271 | 1.0 |
| 21 | 3.189 | 3.1 |
| 22 | 3.105 | 2.9 |
| 23 | 3.101 | 3.2 |

| | | |
|---|---|---|
| 24 | 3.097 | 3.2 |
| 25 | 3.038 | 0.3 |
| 26 | 3.003 | 1.5 |
| 27 | 2.998 | 1.8 |
| 28 | 2.951 | 1.0 |
| 29 | 2.837 | 0.5 |
| 30 | 2.824 | 0.9 |
| 31 | 2.816 | 0.6 |
| 32 | 2.756 | 0.7 |
| 33 | 2.670 | 1.3 |
| 34 | 2.657 | 0.6 |
| 35 | 2.619 | 2.2 |
| 36 | 2.603 | 0.4 |

These data show that little gain in interstitial spacing is obtained between 25 mol.% and 100 mol.% PPA in the barium preparation. However, the weak intensity in the low angle peak (d = 15.89) and the strong intensity of higher angle peaks indicate that a fully pillared material may require higher than 25 mol.% PPA.

EXAMPLE 23

Beryllium oxide powder (6.0 g) was added to a solution of ortho-phosphoric acid (20.9 g) and phenylphosphonic acid (9.48 g) in water (55 g) while the mixture was hand stirred (exothermic). The thin, acidic mixture was adjusted from pH = 1 to pH = 7.2 with dipropylamine (30.45 g) and heated to 186°C in a teflon-lined autoclave under nitrogen pressure (205 psig or 1514 kPa) while stirring. After 4 days, the mixture (pH = 7-8) was cooled, centrifuged, filtered, and washed with water. After drying (110°C for 2 hr), the product was recovered as a white powder 4.7 g) which showed the following X-ray diffraction pattern:

| PEAK | D-SPACE | RELATIVE INTENSITY |
|---|---|---|
| 1 | 16.692 | 100.0 |
| 2 | 15.979 | 1.0 |
| 3 | 5.577 | 1.2 |
| 4 | 4.324 | 1.9 |
| 5 | 4.184 | 9.6 |

| | | |
|---|---|---|
| 6 | 4.111 | 1.2 |
| 7 | 3.931 | 1.5 |
| 8 | 3.844 | 0.8 |
| 9 | 3.347 | 1.1 |
| 10 | 2.979 | 0.5 |
| 11 | 2.911 | 0.5 |

EXAMPLE 24

Strontium oxide powder (6.22 g) was added to a solution of ortho-phosphoric acid (5.2 g) and phenylphosphonic acid (2.4 g) in water (55 g) while the mixture was hand stirred (exothermic). The acidic mixture was adjusted from pH = 3 to pH = 7.2 with dipropylamine (1.73 g) and heated to 174°C in a teflon-lined autoclave under nitrogen pressure (200 psig or 1480 kPa) while stirring. After 4 days, the mixture (pH = 7.0) was cooled, centrifuged, filtered and washed with water. After drying (110°C for 2 hr), the product was recovered as a white powder (7.8 g) which showed the following X-ray diffraction pattern:

| PEAK | D-SPACE | RELATIVE INTENSITY |
|---|---|---|
| 1 | 7.014 | 8.0 |
| 2 | 5.075 | 8.3 |
| 3 | 4.256 | 7.6 |
| 4 | 3.778 | 7.0 |
| 5 | 3.643 | 5.6 |
| 6 | 3.500 | 100.0 |
| 7 | 3.482 | 76.8 |
| 8 | 3.349 | 5.8 |
| 9 | 3.222 | 7.9 |
| 10 | 3.049 | 80.5 |
| 11 | 3.004 | 32.8 |
| 12 | 2.944 | 28.3 |
| 13 | 2.928 | 29.9 |
| 14 | 2.863 | 40.2 |
| 15 | 2.840 | 57.5 |
| 16 | 2.626 | 13.5 |

EXAMPLE 25

Strontium oxide powder (6.22 g) was added to a solution of phenylphosphonic acid (9.49 g) in water (55 g) while the mixture was

hand stirred (exothermic). The acidic mixture (pH = 2.0) was neutralized with dipropylamine (3.29 g; pH = 7.2), then heated to 185°C in a teflon-lined autoclave under nitrogen pressure (200 psig or 1480 kPa) while stirring. After 2 days, the mixture (pH = 8.0) was cooled, centrifuged, filtered, and washed with water. After drying (110°C for 2 hr), the product was recovered as a white powder (4.5 g) which showed the following X-ray diffraction pattern:

| PEAK | D-SPACE | RELATIVE INTENSITY |
|---|---|---|
| 1 | 15.549 | 18.4 |
| 2 | 14.390 | 22.5 |
| 3 | 14.350 | 100.0 |
| 4 | 7.790 | 1.2 |
| 5 | 7.770 | 1.5 |
| 6 | 7.253 | 3.4 |
| 7 | 7.151 | 21.7 |
| 8 | 6.959 | 0.4 |
| 9 | 5.404 | 2.9 |
| 10 | 5.176 | 1.1 |
| 11 | 5.170 | 1.2 |
| 12 | 4.765 | 9.4 |
| 13 | 4.517 | 0.6 |
| 14 | 4.122 | 1.3 |
| 15 | 3.976 | 0.4 |
| 16 | 3.823 | 1.1 |
| 17 | 3.781 | 1.0 |
| 18 | 3.689 | 3.3 |
| 19 | 3.658 | 1.1 |
| 20 | 3.654 | 0.6 |
| 21 | 3.602 | 0.9 |
| 22 | 3.547 | 2.0 |
| 23 | 3.543 | 3.0 |
| 24 | 3.509 | 0.9 |
| 25 | 3.462 | 3.2 |
| 26 | 3.455 | 2.8 |
| 27 | 3.345 | 0.6 |
| 28 | 3.258 | 1.0 |
| 29 | 3.194 | 3.6 |
| 30 | 3.137 | 0.5 |
| 31 | 3.049 | 1.6 |
| 32 | 3.019 | 1.5 |
| 33 | 2.964 | 1.1 |
| 34 | 2.962 | 1.5 |
| 35 | 2.955 | 0.8 |
| 36 | 2.917 | 0.9 |

| | | |
|---|---|---|
| 37 | 2.871 | 0.5 |
| 38 | 2.857 | 1.4 |
| 39 | 2.843 | 1.3 |
| 40 | 2.750 | 4.2 |
| 41 | 2.750 | 3.4 |
| 42 | 2.702 | 0.9 |
| 43 | 2.699 | 1.0 |
| 44 | 2.692 | 0.9 |
| 45 | 2.655 | 1.5 |
| 46 | 2.609 | 0.6 |
| 47 | 2.599 | 1.2 |
| 48 | 2.595 | 0.7 |

EXAMPLE 26

Magnesium oxide powder (9.65 g) was added to a solution of ortho-phosphoric acid (OPA) (20.9 g) and phenylphosphate,

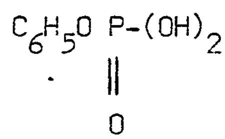

(an inorganic-substituted phosphonate) (10.44 g) in water (55 g) while the mixture was hand stirred (exothermic). The ratio of phenylphosphate to OPA was about 1 to 3. The acidic, sudsy mixture is then adjusted from pH = 3 to pH = 7.2 with dipropylamine (10.9 g) and heated to 180°C in a teflon-lined autoclave under nitrogen pressure (230 psig or 1690 kPa) while stirring. After 4 days, the mixture (pH = 6.2) is cooled, centrifuged, filtered, and washed with water. After drying (110°C for 2 hr), the product is recovered as a white powder which shows a d-spacing greater than 14 angstroms.

EXAMPLE 27

Magnesium oxide powder (9.65 g) was added to a solution of arsenic (V) oxide $As_2C_5$(AO)(20.8g) and phenylarsonic acid (PAA)

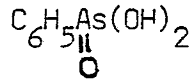

(12.12 g) in water (55 g) while the mixture was hand stirred (exothermic). The ratio of PAA to AO was about 1 to 3. The acidic, sudsy mixture was adjusted from pH = 3 to pH = 7.2 with dipropylamine (10.9 g) and heated to 180°C in a teflon-lined autoclave under nitrogen pressure (230 psig or 1690 kPa) while stirring. After 4 days, the mixture (pH = 6.2) was cooled, centrifuged, filtered, and washed with water. After drying (110°C for 2 hr), the product was recovered as a white powder which showed a d-spacing greater than 14 angstroms.

## CLAIMS

1. A layered divalent metal compound obeying the general formula:

$$M(HAO_4)_x(R[AO_{4-q}]_n)_y(Z)_z$$

wherein M is divalent metal, A is a pentavalent metal, R is a substituent group other than H or OH, covalently bonded to A, Z is an intercalated moiety, x is greater than zero and less than or equal to 1, y is less than 1 such that x+y=1, q is zero or 1, n is 1 or 2, z is 1 or 2 when y is zero, and z is zero to 10 when y is greater than zero.

2. The composition of claim 1 wherein A is selected from the group consisting of P, As, Sb, V, Nb, and Ta, and M is selected from the group consisting of Be, Mg, Ca, Sr, Ba, Ra, Zr, Cd and Hg.

3. The composition of claim 1 or claim 2 wherein Z is $H_2O$.

4. A layered magnesium hydrogen phosphate composition having the formula $MHPO_4\ zH_2O$ wherein z is 1 or 2.

5. A layered divalent metal phosphate composition having the formula:

$$M(HPO_4)_x\ (RPO_{4-q})_y(Z)_z$$

wherein M is a divalent metal; y is at least 0.1 and x + y =1, q is 0 or 1; Z is an intercalated moiety and z is 0-10.

6. The composition of claim 5 wherein Z is $H_2O$ and R is phenyl.

7. A method for preparing the layered divalent metal composition of claim 1 which comprises hydrothermally treating an aqueous reaction mixture having an initial pH prior to said treatment ranging from 3 to 10 and containing a source of the divalent metal, M, a

source of a phosphoric acid, and optionally a source of a substituted acid obeying the formula $((OH)_2OAO_q)_nR$ wherein n, q and R have the meanings indicated in claim 1, wherein the molar ratio of M to the total of the phosphoric acid and any of said substituted acid is 0.8-1.2.

8. The method of claim 7 wherein a pH-raising material is added to said aqueous mixture prior to said hydrothermal treatment.

9. The method of claim 8 wherein said pH-raising material is selected from dipropylamine, triethylamine and tetraethylammonium hydroxide.

10. The method of claim any one of claims 7 to 9 wherein said hydrothermal treatment conditions include a temperature of 50 to 500°C, a pressure of 345 to 3450 kPa, and a contact time of 5 to 192 hours.

Neu eingereicht / Newly filed
Nouvellement déposé
(R 35)

FIGURE 1

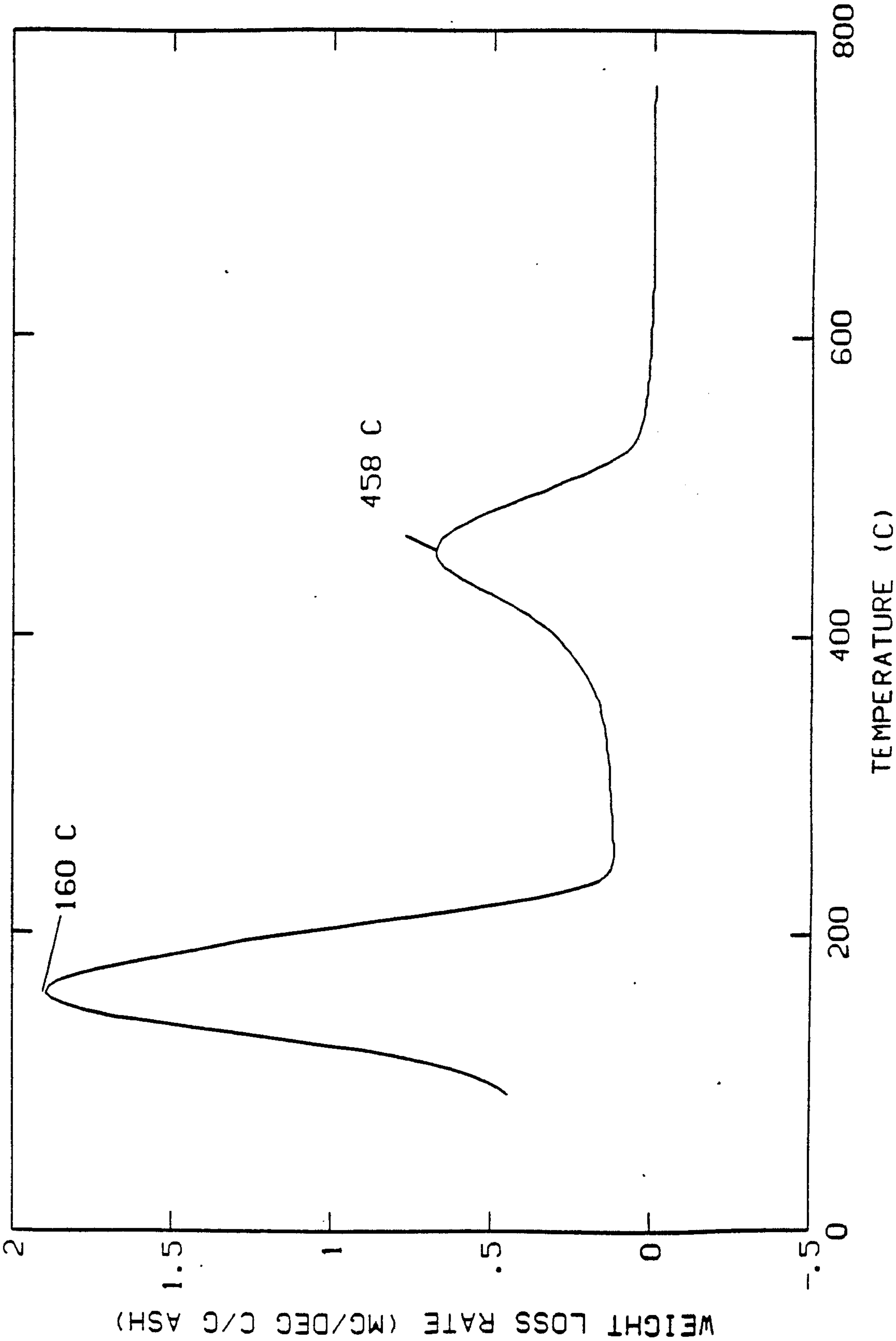

FIGURE 2

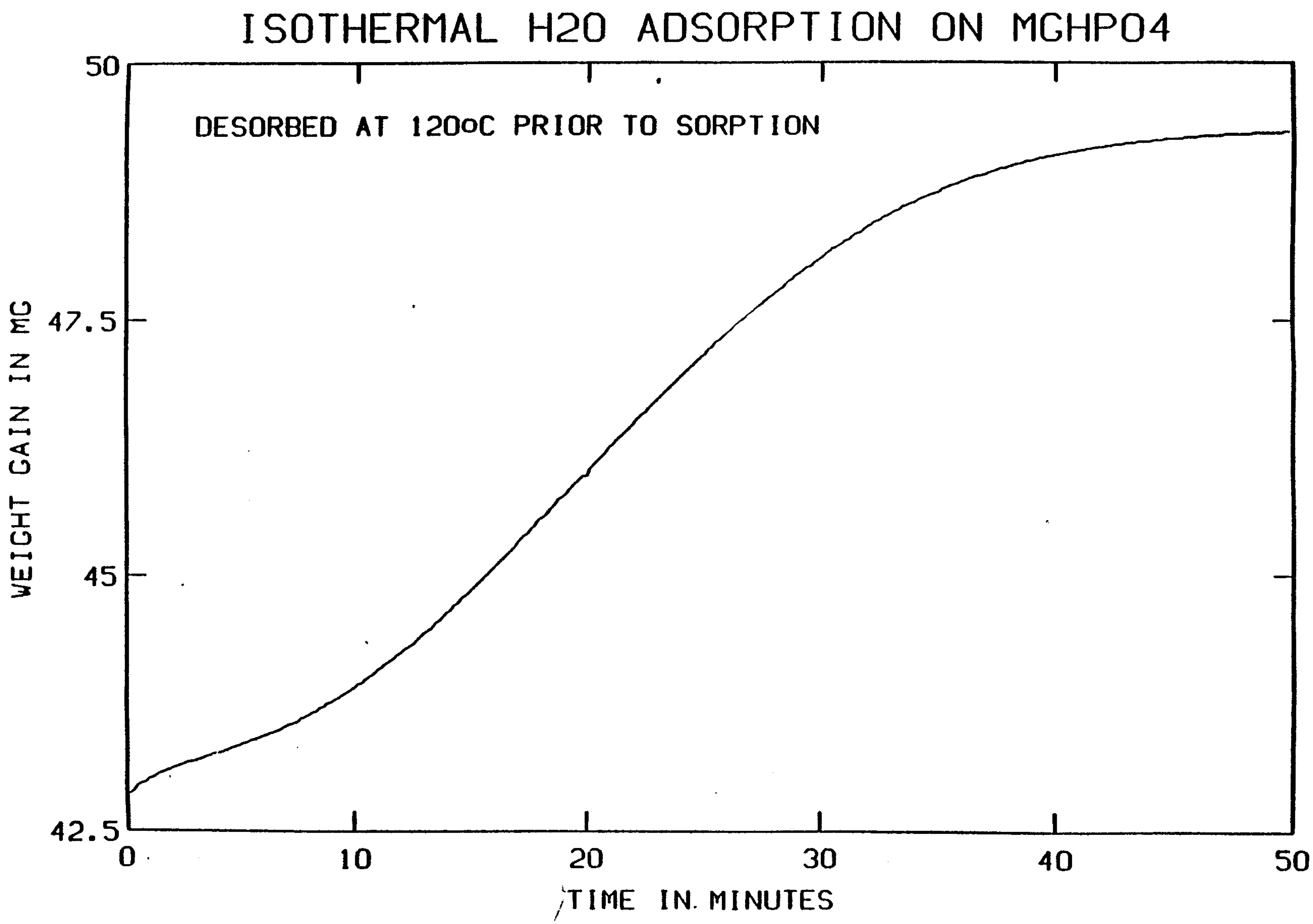
ISOTHERMAL H2O ADSORPTION ON MGHPO4
DESORBED AT 120oC PRIOR TO SORPTION
WEIGHT GAIN IN MG
50
47.5
45
42.5
0
10
20
30
40
50
TIME IN MINUTES